(19) Europäisches Patentamt
European Patent Office
Office européen des brevets

(11) **EP 1 586 375 B1**

(12) **EUROPÄISCHE PATENTSCHRIFT**

(45) Veröffentlichungstag und Bekanntmachung des Hinweises auf die Patenterteilung:
**02.05.2007  Patentblatt 2007/18**

(51) Int Cl.:
***B01J 19/30*** *(2006.01)*

(21) Anmeldenummer: **04006070.9**

(22) Anmeldetag: **15.03.2004**

(54) **Füllkorper**

Packing element

Elément de remplissage

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**19.10.2005  Patentblatt 2005/42**

(73) Patentinhaber: **Vereinigte Füllkörper-Fabriken GmbH & Co. KG**
**56235 Ransbach-Baumbach (DE)**

(72) Erfinder: **Schwämmlein, Kurt, Dr. Dipl.-Chem.**
**55545 Bad Kreuznach (DE)**

(74) Vertreter: **Quermann, Helmut et al**
**Patentanwälte**
**Quermann Sturm**
**Unter den Eichen 7**
**65195 Wiesbaden (DE)**

(56) Entgegenhaltungen:
**EP-A- 0 579 234          BE-A- 481 212**
**GB-A- 1 568 264          US-B1- 6 291 719**

EP 1 586 375 B1

**Beschreibung**

Die Erfindung betrifft einen Füllkörper, insbesondere für Stoff- und/oder Wärmeaustauschkolonnen, die von einer Gas- und/oder Flüssigkeitsströmung durchsetzt werden, wobei der Füllkörper zwei einander abgewandte Stirnflächen aufweist und ein Querschnitt des Füllkörpers gebildet ist, der mehrere nach außen gerichtete Vorsprünge aufweist, sowie mit mindestens zwei, den Füllkörper durchsetzenden Durchgangskanälen, gemäß dem Oberbegriff des Patentanspruchs 1.

Bekanntermaßen werden Füllkörper - in verschiedenen Werkstoffen, in unterschiedlicher Größe und Gestalt - in Stoff- und Wärmeaustauschkolonnen eingesetzt. Die Füllkörper dienen dem Zweck, den Übergang einer oder mehrerer stofflicher oder nichtstofflicher Komponenten zwischen verschiedenen Phasen möglichst effektiv zu gestalten. Technische Anwendungsbeispiele sind dabei - ohne Anspruch auf Vollständigkeit zu erheben oder nur auf diese beschränkt zu bleiben - Absorption, Desorption (Strippung), Destillation/Rektifikation, Extraktion, direkte Gaskühlung, regenerative Verbrennung, katalytische Stoffumwandlungen und andere verfahrenstechnische Trennprozesse oder ganz allgemein chemische oder thermische Prozesse. Bei der Absorption sind beispielsweise zwei Phasen bzw. Medien beteiligt. Der/die gasförmige(n) zu absorbierende(n) Stoff(e) (= stoffliche Komponente(n)) wird/werden aus der Gasphase durch eine geeignete Waschflüssigkeit entfernt und in die flüssige Phase eingetragen und eventuell weiter umgesetzt. Bei der regenerativen Verbrennung (RNV, RTO) ist nur eine Phase beteiligt: Der/die zu entfernende(n) Stoff(e) (stoffliche Komponente(n)) in der Gasphase werden durch die Wärmeübertragung (= nicht stoffliche Komponente, die quasi vom RNV-Wärmespeicherbett zurück ins Gas übertragen wird) von einem zuvor aufgeheizten Wärmespeicher (zum Beispiel keramisches Füllkörperbett) durch einen Verbrennungsvorgang entfernt (in der Regel durch Oxidation mit vorhandenem Luft-Sauerstoff).

Die Füllkörper müssen für alle Anwendungen eine geeignete mechanische Stabilität und eine geeignete Oberfläche aufweisen, sowie eine gute Durchmischung der Phasen erzeugen, ohne der Strömung jedoch einen zu großen Druckverlust entgegen zu setzen. Dies gilt natürlich auch und insbesondere für die Schüttung der Füllkörper, wobei das für den jeweiligen Trennprozess oder chemischen bzw. thermischen Prozess notwendige Schüttvolumen so gering wie möglich sein soll.

In vielen Fällen ist es jedoch notwendig, einen geeigneten Kompromiss zwischen den entgegengesetzt verlaufenden Anforderungen zu suchen. So ist zum Beispiel für eine bestimmte Anwendung die Anforderung nach möglichst geringer Schütthöhe (unter Konstanthaltung der Anströmquerschnittsfläche) durch eine möglichst große spezifische Oberfläche des gewählten Füllkörpertyps zu erreichen, allerdings zu Lasten eines zunehmenden Druckverlustes bei zunehmender spezifischer Füllkörperoberfläche (bzw. abnehmender Füllkörpergröße). Bei keramischen Füllkörpern sind in der Regel die dicken Materialwandstärken aus Gründen der mechanischen Stabilität Problemfaktoren hinsichtlich der Erzielung eines niedrigen Druckverlustes.

Ein Füllkörper der eingangs genannten Art ist aus der EP 0579 234 B1 bekannt. Er weist eine im Allgemeinen röhrenförmige Struktur auf, wobei die Röhrenwand an entgegengesetzten Enden von zueinander senkrechten Durchmessern nach innen verformt ist, um einen Querschnitt mit vier äußeren Vorsprüngen bzw. Flügeln zur Verfügung zu stellen. Aufgrund dessen Gestaltung, d.h. der Bildung des Füllkörper ausschließlich durch die relativ dicke (Außen-) Wandung, ist bei diesem der spezifische Druckverlust recht hoch.

Ein Füllkörper, der einen Querschnitt mit sechs nach außen gerichteten Vorsprüngen aufweist, ist aus der US-A-4 333 893 bekannt. Dieser Füllkörper ist röhrenförmig ausgebildet, wobei er allerdings nicht flach gestaltet ist, sondern seine Abmessungen, bezogen auf die Länge bzw. Breite bzw. einem gedachten Durchmesser des Füllkörpers, geringer sind als die Höhe des Füllkörper, somit seine Erstreckung in der Längsachse der Röhre. Dieser Füllkörper zeichnet sich ferner dadurch aus, dass er im Inneren mit einem schwammförmigen Material ausgefüllt ist, um so die Oberfläche des Füllkörpers zu erhöhen.

In dem Firmenprospekt "VFF - Ihr kompetenter Kolonnenausrüster und Berater" der Firma Vereinigte Füllkörperfabriken GmbH & Co. KG, D-56225 Ransbach-Baumbach, Druckschrift KP/HD/05/03/5000 ist die Sonderform eines Füllkörpers aus Keramik beschrieben. Der Füllkörper ist gedanklich durch zwei im Querschnitt quadratische Füllkörperabschnitte, die im Bereich einer Ecke aneinander liegen und überstehende Ansatzpaare im Bereich der abgewandten Ecken der quadratischen Füllkörperteile gebildet. Der Füllkörper weist eine in der Dicke konstante Wandstruktur auf mit zwei Durchgangskanälen.

Der vorliegenden Erfindung liegt die Aufgabe zu Grunde, einen Füllkörper zu schaffen, der bei möglichst großer spezifischer Oberfläche in der Füllkörperschüttung einen möglichst niedrigen Druckverlust im trockenen und im berieselten Zustand erzielt. Gemäß Weiterbildungen der Erfindung soll eine gute mechanische Stabilität bei der Wahl des Werkstoffs vorliegen und eine rationelle sowie kostengünstige Herstellungsweise gewährleistet sein.

Gelöst wird die Aufgabe durch einen Füllkörper der gemäß den Merkmalen des Patentanspruchs 1 ausgebildet ist.

Der Füllkörper ist flach ausgebildet. Des Weiteren sind die die Durchgangskanäle trennenden Wände dünnwandig gegenüber der Außenwandung des Füllkörpers gestaltet. Der Füllkörper besteht insbesondere aus keramischem Werkstoff oder Kunststoff; auch das Material Metall ist möglich. In einer bevorzugten Ausführungsform des Füllkörpers weist dieser sechs Vorsprünge und acht Durchgangskanäle auf. Die Vorsprünge sind insbesondere spitz ausgebildet. Flache Füllkörper können gewellt oder sattelförmig gestaltet sein. Die Außenflächen und/oder Innenflächen der Außenstruktur des Füllkörpers sind insbesondere glatt oder zumindest teilweise profiliert gestaltet. Überdies kann der flache Füllkörper verdrillt gestaltet sein.

Der für die Erfindung grundlegende Gedanke für den Füllkörper, insbesondere den keramischen Füllkörper, mit einem niedrigen Druckverlust, ist der gitterartig aufgebaute Füllkörper mit einer sehr offenen Struktur und flachen Form, die zum Beispiel gewellt oder sattelformähnlich sein kann. Um die Oberfläche des gitterförmigen Füllkörper weiter zu erhöhen, können die Außen- und/oder Innenflächen teilweise oder auch ganz profiliert, zum Beispiel geriffelt sein. Die mechanische Stabilität erhält insbesondere die keramische Ausführungsform dadurch, dass der Außenbereich eine tragende Funktion mit deutlich dickeren Wandstärken als die inneren Stege aufweist, und dass der Außenbereich aus mehreren zueinander geneigten Teilflächen besteht.

Eine bevorzugte Ausgestaltungsform des Füllkörpers weist sechs Vorsprünge und sechs V-form-ähnliche Bereiche auf, wobei der Winkel zwischen den beiden Schenkeln der V-Form bevorzugt zwischen ca. 130 Grad und ca. 175 Grad liegt und die einzelnen Teilflächen gekrümmt sein können, um zu einer größeren Oberfläche zu gelangen. Da die inneren Flächenelemente eine im Vergleich zur äußeren Wandung sehr dünne Wandstärke aufweisen, liegen sehr große offene Kanäle vor, die durch die Wandstärke im Fall zweier übereinander liegender Füllkörper nur zu einem geringen Teil abgedeckt werden. Dieser Sachverhalt trifft auch dann zu, wenn diese Füllkörper um 90 Grad gegeneinander verdreht aufeinander liegen und der Füllkörper extrem flach gestaltet ist. Dadurch steht für die Mediendurchströmung durch den Füllkörper auch in einer regellosen Schüttung für einen niedrigen Druckverlust stets genügend freie bzw. offene Struktur zur Verfügung. Die Kanäle können eine runde, dreieckige, viereckige Querschnittsfläche oder ganz allgemein eine Querschnittsfläche eines Polygons aufweisen. Außerdem gewährleistet die bevorzugte Ausführungsform einer sehr flachen Gestalt eine strömungsgünstige Ausrichtung der Füllkörper in einer Schüttung.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand diverser Ausführungsformen dargestellt, ohne hierauf beschränkt zu sein.

Es stellt dar:

Fig. 1          eine räumliche Ansicht eines Füllkörpers,

Fig. 2          eine Draufsicht des in Fig. 1 gezeigten Füllkörpers,

Fig. 3          eine Seitenansicht des in den Fig. 1 und 2 gezeigten Füllkörpers,

Fig.4           einen gegenüber dem Füllkörper gemäß der Ausführungsform nach den Fig. 1 bis 3 abgewandelten Füllkörper, in einer mit der Darstellung der Fig. 3 vergleichbaren Seitenansicht,

Fig. 5          eine weitere Ausführungsform eines Füllkörpers, in einer mit der Darstellung der Figur 3 vergleichbaren Seitenansicht,

Fig. 6          eine weitere Ausführungsform des Füllkörpers, in einer mit der Darstellung der Figur 5 vergleichbaren Seitenansicht,

Fig. 7          eine Ansicht des in Fig. 6 gezeigten Füllkörpers, gesehen in Richtung des Pfeils VII in Fig. 6,

Fig. 8          eine Ansicht eines weiter modifizierten Füllkörpers, in Richtung des Pfeil VII in Fig. 6 gesehen, unter dem Aspekt der möglichen Modifizierungen der Füllkörper-Varianten gemäß der Figuren 1 bis 7,

Fig. 9          eine weitere Ausführungsform des Füllkörpers, in einer Seitenansicht gemäß Fig. 3, bei aufeinander zugewölbten Stirnflächen des Füllkörpers,

Fig. 10         eine Ausführungsform ähnlich der nach Fig. 9, in einer Seitenansicht, bei voneinander weg gewölbten Stirnflächen des Füllkörpers,

Fig. 11         eine räumliche Ansicht des gegenüber dem Füllkörper nach Fig. 1 abgewandelten Füllkörpers, der auf seinen Innen- und Außenflächen mit Erhebungen und Vertiefungen versehen ist,

Fig. 12 bis 15     Detailbereiche des Füllkörpers nach Fig. 11 mit unterschiedlichen Wandprofilen,

Fig. 16     eine weitere Ausführungsform des Füllkörpers, bei dem die Außenwand Bereiche mit erhöhter Masse aufweist.

Der Füllkörper 1 für den Stoff- und/oder Wärmeaustausch weist eine relativ dicke Außenwandung 2 und eine von dieser umgebene gitterförmige Innenstruktur 3 auf. Die Wände 4 der Innenstruktur 3 sind dünnwandig gegenüber der Außenwandung 2 des Füllkörpers 1 ausgebildet. Das Verhältnis von Stärke der Außenwandung 2 zu Stärke der trennenden Wände 4 beträgt bevorzugt 2:1 bis 4:1. Die Stärke der Außenwand beträgt, je nach Größe des Füllkörpers, 1 - 6 mm und die Stärke der trennenden Wand 0,5 - 1,5 mm.

Der Füllkörper 1 ist flach ausgebildet. Er weist zwei einander abgewandte Stirnflächen 5 und 6 auf, die parallel zueinander angeordnet sind. Die Außenwandung 2 verläuft zick-zack-förmig, wobei der Füllkörper 1 sechs nach außen gerichtete, spitz ausgebildete Vorsprünge 7 aufweist. Zwischen den benachbarten Vorsprüngen 7 ist jeweils ein eckiger Rücksprung 8 gebildet, somit weist der Füllkörper 1 sechs Rücksprünge 8 auf. Die beiden Schenkel 9 und 10 des V schließen miteinander einen Winkel von bevorzugt 130 bis 175 Grad ein.

Diese Figuren zeigen somit einen gitterförmigen Polyeder-Füllkörper mit glatter Oberfläche in symmetrischer Gestaltungsform. Der Füllkörper besteht insbesondere aus keramischem Werkstoff. Weitere geometrische Einzelheiten dieses Füllkörpers sind in diesen Figuren erläutert:

Die gedachte Füllkörperachse C2 ist eine Drehachse, die bei Drehung um 180 Grad den Füllkörper, dies gilt durchaus auch für nachfolgend noch erörterte Ausgestaltungsformen, wieder ganz oder annähernd zur Deckung mit der Ursprungslage bringt. Diese Füllkörperachse C2 ist in der Regel parallel zur Füllkörperhöhe H bzw. zur Flächennormale der Kanalquerschnittsfläche der mittleren Kanäle 11 ausgerichtet, bzw. halbiert annähernd den Winkel zwischen zwei solchen Flächennormalen. Die äußere Form des Füllkörpers 1 lässt sich im weitesten Sinne von einem mit Kanälen 11 durchzogenen Quader der Länge L, der Breite B und der Höhe H abgeleitet denken, wobei die Mantelflächen jedoch nicht notwendigerweise völlig eben und gegenüber liegende Mantelflächen nicht notwendigerweise parallel sein müssen. Beispielsweise sind zwei gegenüber liegende Mantelflächen kanalförmig durchbrochen und die restlichen Mantelflächen bestehen faltblattähnlich aus einzelnen planen oder gekrümmten Teilflächen 2i. Jeweils zwei benachbarte Teilflächen definieren bzw. schließen bestimmte Winkel $\beta i$ ($\beta 1$-$\beta 6$) oder $\gamma i$ ($\gamma 1$ -$\gamma 6$) ein, wobei diese Winkel keinen Beschränkungen unterworfen sind. Dadurch kommt eine äußere, gewellte bzw. zick-zack-förmige Wandung 2 mit einer Wandstärke W1 zu Stande, die dem Füllkörper 1 die mechanische Stabilität gibt und deswegen beispielsweise im Falle eines keramischen Werkstoffs wesentlich dicker als die Wandstärke W2 der inneren Wandungen 4 ist. Der Kanalinnenraum ist durch die Teilflächen 4i definiert, wobei die Kanäle dreieckige, viereckige oder jede andere vieleckige oder auch runde Form oder auch gemischte Formen aufweisen können und die einzelnen Teilflächen 4i eben oder gekrümmt sein können. Durch Variation der Anzahl, Form und Abmessungen der Kanalformen, bzw. die der Teilflächen 4i sowie deren Oberflächenprofilierung, kann bei identischer äußerer Form des erfindungsgemäßen Füllkörpers die spezifische Oberfläche in definierter Form vergrößert oder auch verkleinert werden. Die Ecken und Kanten des Füllkörpers sind aus Stabilitätsgründen bevorzugt abgerundet.

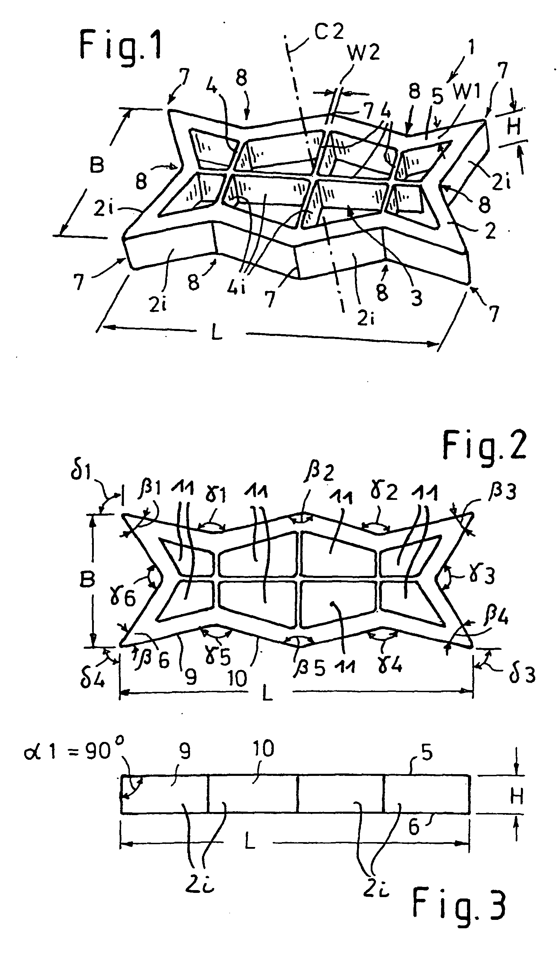

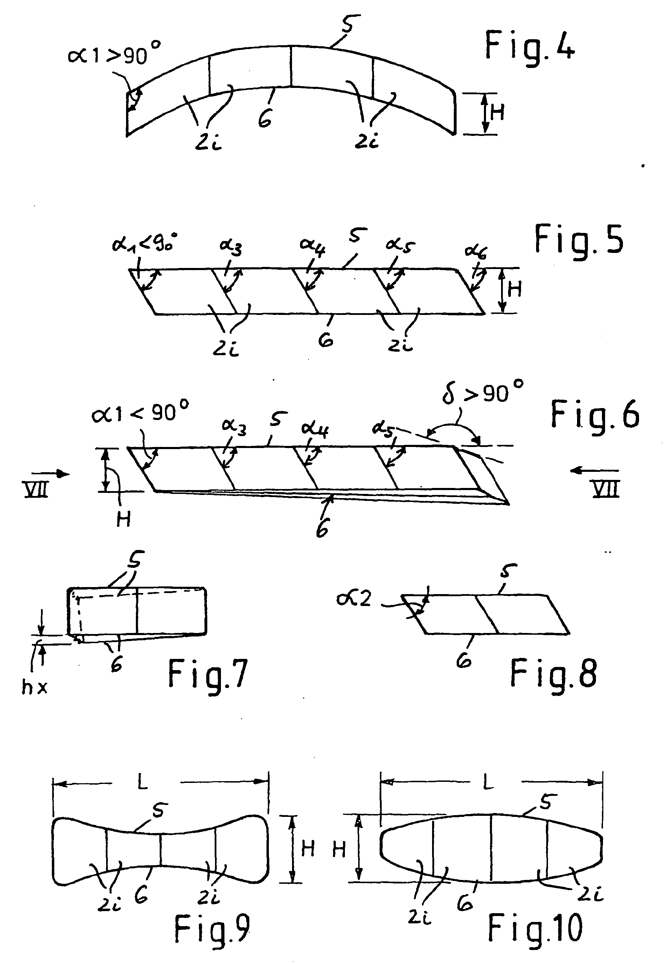

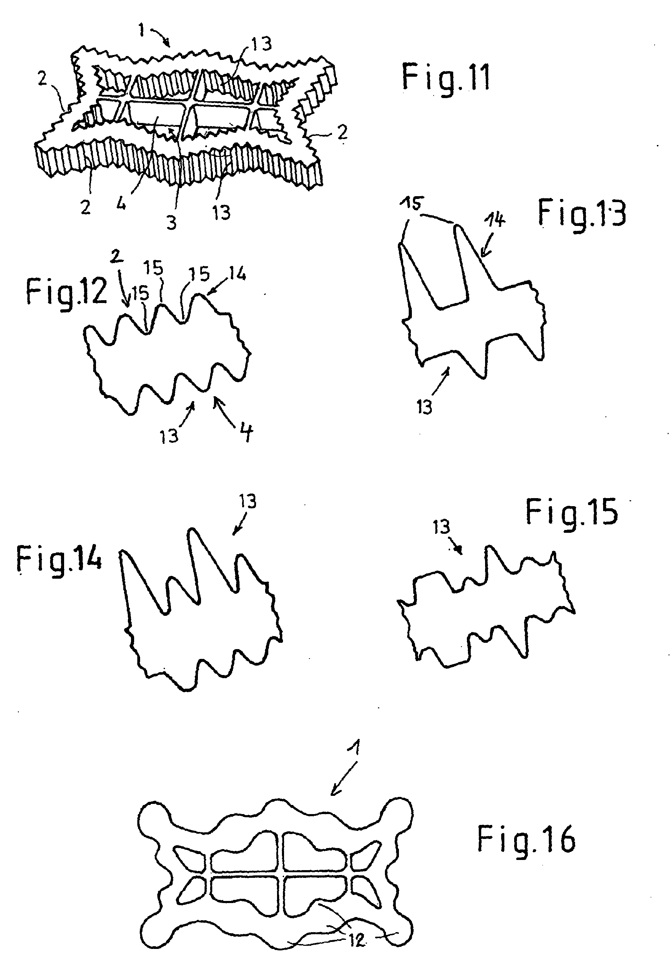

Der Füllkörper selbst ist bevorzugt symmetrisch bis leicht unsymmetrisch, eben oder in sich leicht verdrillt und mit einem Winkel $\alpha 1$ etwas geringer als 90 Grad ausgestaltet, wobei die Winkel $\alpha i$ ($\alpha 1$ - $\alpha 6$) zum Beispiel die Neigung der Teilflächen 2i bzw. 4i gegen die gedachte Füllkörperachse C2 definieren. Der in den Figuren 1 bis 3 gezeigte Füllkörper kann aber auch gewölbt, sattelförmig (siehe Fig. 4, $\alpha 1 > 90°$) oder deutlich unsymmetrisch (siehe Fig. 5, $\alpha 1 < 90°$) und gewölbt - auch beidseitig nach innen (siehe Fig. 9) oder beidseitig nach außen (siehe Fig. 10) - ausgeführt sein, um insbesondere eine Linien- bzw. Punktberührung zwischen verschiedenen Füllkörpern in einer regellosen Schüttung stärker zu betonen, wodurch eine signifikante Flächenberührung zwischen zwei Füllkörpern vermieden wird.

Unsymmetrische Abwandlungen des in den Figuren 1 bis 3 gezeigten Füllkörpers sind, auf die interessierende Seitenansicht bezogen, in den Figuren 6 bis 8 veranschaulicht. Bei der Ausführungsform nach Figur 6 und 7 ist $\alpha 1 < 90°$ und $\delta 1 > 90°$, so dass sich eine leichte Verdrehung des Füllkörpers um seine Längsachse um die Randhöhe hx ergibt. Bei der Ausführungsform nach Figur 8 ist $\alpha 2 < 90°$, so dass sich eine Unsymmetrie ähnlich der Ausführungsform nach Figur 5 ergibt, allerdings in Richtung der kleineren Stirnfläche des Füllkörpers gesehen.

In den meisten Fällen werden aus konstruktiven bzw. Gesamtgewichtsgründen die Wandstärken nur entsprechend der mechanischen Stabilitätsanforderungen ausgeführt werden. In besonderen Fällen, d.h. bei Anwendungen, die bevorzugt eine hohe spezifische Masse erfordern, kann die Masse des Füllkörpers gesteigert werden, indem die einzelnen Teilflächen, zum Beispiel 2i, bzw. die äußere Wandung (2) durch runde oder eckige Verdickungen 12 (siehe Fig. 16) mit zusätzlichen oder ausschließlich lokalen Verdickungen, d.h. massereicher ausgestaltet werden und/oder die Wandstärken vergrößert werden.

Fig. 11 zeigt eine bevorzugte Ausgestaltung des Füllkörpers 1 mit feinprofilierter Oberfläche, d.h. zum Beispiel Riffelung 13. Unterschiedliche Arten der Riffelung sind in der Darstellung der Figuren 12 bis 15 veranschaulicht. Die Riffelung dient der Erhöhung der spezifischen Oberfläche. Dabei kann/können sowohl die Oberfläche der Außenwand 2, als auch der Wände 4 der Innenstruktur 3 sowie auch einzeln und unabhängig voneinander die einzelnen Teilflächen zum Beispiel geriffelt werden, wobei verschiedene Formen der Riffelung vorliegen können. Bei Betrachtung einer Wandung können beide Seiten versetzt bzw. in gleicher Abfolge wellenförmig bzw. zick-zack-förmig geriffelt sein, wobei die Riffelung jeweils gleich oder abwechselnd unterschiedliche Form und Höhe bzw. Breite aufweisen kann. Bei der bevorzugten Form der Riffelung liegt als bestimmendes Element ein in etwa gleichschenkliges, insbesondere gleichseitiges Dreieck 14 mit abgerundeten Ecken 15 vor.

Die bevorzugte Ausführung ist eine generelle flache Ausgestaltung mit Wandstärken, die kleiner als etwa die Hälfte der Kanalinnenabmessungen sind, so dass innerhalb der regellosen Schüttung sich die Füllkörper zumeist flach übereinander legen und zumeist auch für ungünstige Lagen in allgemeinen Durchtrittsöffnungen für die Fluid-Strömung ohne große Umlenkungen der Strömungsrichtung vorhanden sind, woraus ein niedriger Druckverlust resultiert. Durch die leichte Unsymmetrie des Füllkörpers sowie der gewellten Oberflächenteile ist gewährleistet, dass nur der unvermeidbare und geringe Oberflächenteil durch Punkt- bzw. Linienberührung (der Füllkörper untereinander in der regellosen Schüttung) der Stoffaustauschoberfläche verloren geht.

Die Verhältnisse hinsichtlich Länge L, Breite B, Höhe H, Anzahl der Vorsprünge 7 und den Vorsprüngen zugeordneten Ecken, Wandstärken W1 und W2, Winkel $\alpha i$, $\beta i$ und $\gamma i$, $\delta i$, Kanalformen sowie -abmessungen, Füllkörpersymmetrie, gewölbte oder in sich verdrillte Form, Teilflächenausgestaltung sowie

Oberflächenprofilierung, usw. sind keinen Beschränkungen unterworfen, die bevorzugten Verhältnisse liegen jedoch bei:

$$(L+B) * 0{,}5 = (3 \text{ bis } 6) * H$$

L,B,H: jeweils keine Beschränkung
Anzahl Vorsprünge 7 der Außenwandung 2: mindestens 6
Anzahl der Kanäle 11 der Innenstruktur 3: mindestens 2
Kanalform: viereckig mit annähernd gleicher Querschnittsfläche aller Kanäle.
W1: (1,5 bis 6) mm
W2: (0,5 bis 1,5) mm
$\alpha i$: 45 bis 90 Grad
$\beta 1$, $\beta 3$, $\beta 4$ und $\beta 6$: je 20 bis 85 Grad
$\beta 2$ und $\beta 5$: je 130 bis 175 Grad
$\gamma i$: 100 bis 175 Grad
$\delta i$: annähernd 90 Grad.

Füllkörpersymmetrie: mäßig unsymmetrisch - jedoch annähernd symmetrisch zur C2-Füllkörperachse - mit leichter Verdrillung, d.h. legt man den flachen Füllkörper auf eine ebene Unterlage, wobei die gedachte Füllkörperachse parallel zur Flächennormale dieser Unterlage ausgerichtet ist, so wird die Unterlage von den drei äußeren Ecken des Füllkörpers berührt und die vierte äußere Ecke hat einen Abstand zu dieser Unterlage von ca. 20 % bezüglich der Füllkörperhöhe.

Die Erzielung eines niedrigeren Druckverlustes mit dem erfindungsgemäßen Füllkörper in einer trockenen und in einer berieselten Schüttung, im Vergleich zum Stand der Technik bei vergleichbaren spezifischen Oberflächen, ist aus der nachfolgenden Tabelle 1 ersichtlich, wobei sich der erfindungsgemäße Füllkörper auch unter Berücksichtigung des Volumensetzungsfaktors sowie der experimentell beobachteten tatsächlichen spezifischen Oberflächen nach der Kolonnenbefüllung und unter Berücksichtigung der jeweiligen Fehlerbandbreite deutlich von dem Stand der Technik absetzt.

Verglichen wurden die folgenden drei Füllkörper aus Keramik - Füllkörper A, Füllkörper B und Füllkörper C - die sich wie folgt darstellen:

Füllkörper A: Erfindungsgemäßer Füllkörper : L x B x H = 52 x 28,5 x 11,5 (je in mm); W1 = 3,5 mm; leicht unsymmetrische, flache Ausführung, wobei der Füllkörper leicht in sich verdrillt ist (hx = 1 mm) und $\alpha 1$ ca. 85 Grad und $\alpha 2$ annähernd 90 Grad beträgt; geriffelte Oberfläche der gesamten äußeren Wandung mit gleichseitigem Dreieck als bestimmendem Element mit 1 mm Seitenlänge; mäßig zueinander geneigte Teilflächen mit $\gamma i$ 165 Grad, sechs Ecken; $\delta i$ annähernd 90 Grad, acht viereckige Kanäle; Kanalquerschnittsfläche: untereinander annähernd gleich (Erläuterungen zu den Bezeichnungen siehe Figuren 1 bis 3 und 7, 8).

Füllkörper B: Letschert's Reform-Ring, geriffelte Oberfläche mit gleichseitigem Dreieck als bestimmendem Element mit 1 mm Seitenlänge; L x B x H: 45 x 39 x 13 (je in mm); Wandstärke 3,5 mm (VFF-Prospekt "Ihr kompetenter Kolonnenausrüster und Berater", KP/HD/05/03/5000, S. 9 - "Sonderformen": dreieckförmiger Letschert Reform-Ring).

Füllkörper C: gemäß der Ausführungsform nach der Fig. 3 der EP 0 579 234 B1; L x B x H: 50 x 32 x 12 (je in mm), Wandstärke 4,5 mm.

Tabelle 1: Ergebnisse von Druckverlustmessungen verschiedener keramischer Füllkörper mit einer spezifischen Oberfläche von 190 m$^2$/m$^3$ (+/- 10 %) in der regellosen Schüttung (Kolonnendurchmesser: 0,44 m; Kolonnendurchmesser/Füllkörpernennmaß: 14 - 16; System: Luft/Trinkwasser; 1.013 mbar; 20 Grad Celsius):

| Füllkörper (Keramik) | spez.Oberfläche (in der Schüttung) m$^2$/m$^3$ | Berieselungsdichte m$^3$/(m$^2$ x h) | Gasbelastungsfaktor $F_v$ $\sqrt{Pa}$ | spez. Druckverlust (Pa/m) |
|---|---|---|---|---|
| A | 200 | 0 | 1 | 127 |
| A | 200 | 0 | 2 | 500 |
| B | 190 | 0 | 1 | 158 |
| B | 190 | 0 | 2 | 600 |
| C | 170 | 0 | 1 | 200 |
| C | 170 | 0 | 2 | 750 |
| A | 200 | 40 | 1 | 300 |
| B | 190 | 40 | 1 | 315 |
| C | 170 | 40 | 1 | 680 |

**Patentansprüche**

1. Füllkörper (1), insbesondere für Stoff- und / oder Wärmeaustauschkolonnen, die von einer Gas- und / oder Flüssigkeitsströmung durchsetzt werden, wobei der Füllkörper (1) zwei einander abgewandte Stirnflächen (5, 6) aufweist und ein Querschnitt des Füllkörpers (1) gebildet ist, der mehrere nach außen gerichtete Vorsprünge (7) aufweist, sowie mit mindestens zwei, den Füllkörper (1) durchsetzenden Durchgangskanälen (11), **dadurch gekennzeichnet, dass** der Füllkörper (1) eine gitterförmige innenstruktur (3) und mindestens sechs Vorsprünge (7) aufweist, der Füllkörper (1) flach ausgebildet und gewellt, sattelförmig oder verdrillt gestaltet ist, sowie die die Durchgangskanäle (11) trennenden Wände (4) dünnwandig gegenüber der Außenwandung (2) des Füllkörpers (1) sind.

2. Füllkörper nach Anspruch 1, **dadurch gekennzeichnet, dass** er die Abmessungen (L+B)*0,5=(3 bis 6)*H, bei L = Länge, B = Breite, H = Höhe des Füllkörpers (1) aufweist.

3. Füllkörper nach Anspruch 1 oder 2, **dadurch gekennzeichnet, dass** das Verhältnis von Stärke der Außenwandung (2) zu Stärke der trennenden Wand (4) 2 : 1 bis 4 : 1 ist.

4. Füllkörper nach Anspruch 3, **dadurch gekennzeichnet, dass** die Stärke der Außenwandung 1 bis 6 mm und die Stärke der trennenden Wand 0,5 bis 1,5 mm ist.

5. Füllkörper nach einem der Ansprüche 1 bis 4, **dadurch gekennzeichnet, dass** er aus keramischem Werkstoff oder Kunststoff besteht.

6. Füllkörper nach einem der Ansprüche 1 bis 5, **dadurch gekennzeichnet, dass** er sechs Vorsprünge (7) und acht Durchgangskanäle (11) aufweist.

7. Füllkörper nach einem der Ansprüche 1 bis 6, **dadurch gekennzeichnet, dass** die Vorsprünge (7) spitz ausgebildet sind.

8. Füllkörper nach einem der Ansprüche 1 bis 7, **dadurch gekennzeichnet, dass** die Außenfläche und/oder Innenfläche der Außenstruktur (2) des Füllkörpers (1) glatt oder zumindest teilweise profiliert gestaltet ist.

9. Füllkörper nach einem der Ansprüche 1 bis 8, **dadurch gekennzeichnet, dass** zwischen den Vorsprüngen (7) V-förmige Rücksprünge (8) in der Außenstruktur (2) des Füllkörpers (1) gebildet sind, insbesondere V-förmige Rücksprünge (8) mit einem Winkel zwischen den Schenkeln (9, 10) des V von 130 bis 175 Grad.

**Claims**

1. Packing element (1) in particular for material and/or heat exchanger columns, which are passed through by a gas and/or fluid flow, where the packing element (1) exhibits two faces turned away from each other and a cross section of the packing element (1) is formed which exhibits several projections (7) pointing outwards, also with at least two through channels (11) passing through the packing element (1), **characterised by** the fact that the packing element (1) exhibits a grid shaped internal structure (3) and at least six projections (7), the packing element is shaped flat and corrugated, saddle shaped or twisted, also the walls (4) separating the through channels (11) are thin walled opposite the outer wall (2) of the packing element (1).

2. Packing element according to claim 1, **characterised by** the fact that it exhibits the dimensions (L + B)*0.5=(3 to 6)*H, where L = length, B = breadth, H = height of the packing element (1).

3. Packing element according to claim 1 or 2, **characterised by** the fact that the ratio of the thickness of the outer wall (2) to the thickness of the separating wall (4) is 2:1 to 4:1.

4. Packing element according to claim 3, **characterised by** the fact that the thickness of the outer wall is 1 to 6 mm and the thickness of the separating wall 0.5 to 1.5 mm.

5. Packing element according to one of the claims 1 to 4, **characterised by** the fact that it is made of ceramic material or plastic.

6. Packing element according to one of the claims 1 to 5, **characterised by** the fact that it exhibits six projections (7) and eight passage channels (11).

7. Packing element according to one of the claims 1 to 6, **characterised by** the fact that the projections (7) are shaped pointed.

8. Packing element according to one of the claims 1 to 7, **characterised by** the fact that the outer surface and/or inner surface of the outer structure (2) of the packing element (1) is formed smooth or at least partly profiled.

9. Packing element according to one of the claims 1 to 7, **characterised by** the fact that between the projections (7) V-shaped recesses (8) are formed in the outer structure (2) of the packing element (1), in particular V-shaped recesses (8) with an angle between the arms (9, 10) of the V of 130 to 175 degrees.

**Revendications**

1. Corps de remplissage (1), en particulier pour des colonnes de transfert de masse et/ou des colonnes d'échange de chaleur qui sont traversées par un courant de gaz et/ou par un courant de liquide, le corps de remplissage (1) présentant deux faces frontales (5, 6) se détournant l'une de l'autre et une section transversale du corps de remplissage (1) qui présente plusieurs saillies (7) orientées vers l'extérieur, et au moins deux canaux de passage (11) traversant le corps de remplissage (1), **caractérisé en ce que** le corps de remplissage (1) présente une structure interne (3) en forme de grille et au moins six saillies (7), le corps de remplissage (1) est réalisé à plat et présente une configuration ondulée, en forme de selle ou torsadée, et les parois (4) séparant les canaux de passage (11) sont des parois minces par rapport à la paroi externe (2) du corps de remplissage (1).

2. Corps de remplissage selon la revendication 1, **caractérisé en ce qu'**il présente les dimensions (L+B)*0,5 = (3 à 6)*H, L représentant la longueur, B représentant la largeur, H représentant la hauteur du corps de remplissage (1).

3. Corps de remplissage selon la revendication 1 ou 2, **caractérisé en ce que** le rapport de l'épaisseur de la paroi externe (2) à l'épaisseur de la paroi de séparation (4) s'élève de 2 : 1 à 4 : 1.

4. Corps de remplissage selon la revendication 3, **caractérisé en ce que** l'épaisseur de la paroi externe s'élève de 1 à 6 mm et l'épaisseur de la paroi de séparation s'élève de 0,5 à 1,5 mm.

5. Corps de remplissage selon l'une quelconque des revendications 1 à 4, **caractérisé en ce qu'**il est constitué d'un matériau céramique ou d'une matière synthétique.

6. Corps de remplissage selon l'une quelconque des revendications 1 à 5, **caractérisé en ce qu'**il présente six saillies (7) et huit canaux de passage (11).

7. Corps de remplissage selon l'une quelconque des revendications 1 à 6, **caractérisé en ce que** les saillies (7) sont pointues.

8. Corps de remplissage selon l'une quelconque des revendications 1 à 7, **caractérisé en ce que** la surface externe et/ou la surface interne de la structure externe (2) du corps de remplissage (1) sont lisses ou sont réalisées pour être profilées au moins en partie.

9. Corps de remplissage selon l'une quelconque des revendications 1 à 8, **caractérisé en ce que** des retraits (8) en forme de V sont formés entre les saillies (7) dans la structure externe (2) du corps de remplissage (1), en particulier des retraits en V (8) formant un angle, entre les branches (9, 10) du V de 130 à 175 degrés.

Fig.1

Fig.2

Fig.3

Fig.4

$\alpha 1 > 90°$

5

H

$2i$  6  $2i$

Fig.5

$\alpha_1 < 90°$  $\alpha_3$  $\alpha_4$  5  $\alpha_5$  $\alpha_6$

H

$2i$  6  $2i$

Fig.6

$\alpha 1 < 90°$  $\alpha_3$  5  $\alpha_4$  $\alpha_5$  $\delta > 90°$

VII

H

VII

6

Fig.7

5

6

$hx$

Fig.8

$\alpha 2$  5

6

Fig.9

L

5

H

$2i$  6  $2i$

Fig.10

L

5

H

H

$2i$  6  $2i$

Fig.11

Fig.13

Fig.12

Fig.14

Fig.15

Fig.16